# EUROPÄISCHE PATENTSCHRIFT

(11) **EP 2 110 561 B1**
(45) Veröffentlichungstag und Bekanntmachung des Hinweises auf die Patenterteilung: **04.05.2011**
(21) Anmeldenummer: 08007379.4
(22) Anmeldetag: 15.04.2008
(51) Int. Cl.: F15B 13/08, H02G 15/06

(54) **Elektrische Anschlusseinheit und damit ausgestattete Ventilanordnung**
Electrical connecting unit and valve assembly fitted with the same
Unité de connexion électrique et ensemble de soupapes équipé de celle-ci

(43) Veröffentlichungstag der Anmeldung: 21.10.2009
(73) Patentinhaber: FESTO AG & Co. KG, 73734 Esslingen (DE)
(72) Erfinder: Brenner, Jakob, 73730 Esslingen (DE); Bogdanowicz, Grzegorz, 73760 Ostfildern (DE)
(74) Vertreter: Abel, Martin

(56) Entgegenhaltungen:
- EP-A- 0 620 197
- EP-A- 1 094 260
- DE-A1- 3 215 054
- US-A- 3 265 352
- US-A- 4 399 836

## Beschreibung

Die Erfindung betrifft eine elektrische Anschlusseinheit zum elektrischen Anschließen einer Ventilanordnung mittels eines elektrischen Anschlusskabels, mit einem Gehäuse, das eine Anschlussseite mit länglichen Umriss aufweist, von der an einem Kabelabgangsbereich das Anschlusskabel abgeht, wobei der Kabelabgangsbereich seitwärts außermittig versetzt zur breitenmittig verlaufenden Längsachse der Anschlussseite des Gehäuses innerhalb des Umrisses der Anschlussseite angeordnet ist und die Abgangsrichtung des Anschlusskabels an dem Kabelabgangsbereich zumindest im Wesentlichen parallel zu der Längsachse der Anschlussseite des Gehäuses verläuft.

Die Erfindung betrifft ferner eine Ventilanordnung, die mindestens eine mit einem elektrisch betätigbaren Ventilantrieb ausgestattete Ventileinheit umfasst, an der eine elektrische Anschlusseinheit angeordnet ist, die eine elektrische Kontaktierung der Ventilanordnung mittels eines elektrischen Anschlusskabels ermöglicht.

In der undatierten Produktinformation "Serie SY3000/5000/7000", Seite 2.15 und 2.16 der Firma SMC ist eine Ventilanordnung und elektrische Anschlusseinheit illustriert, wobei die Ventilanordnung ein Hauptventil mit einer stirnseitig daran angebauten, als Vorsteuerstufe fungierenden Ventileinheit umfasst, die einen elektrisch betätigbaren Ventilantrieb enthält. An die Ventileinheit ist fest eine elektrische Anschlusseinheit angebaut, an deren vom Hauptventil wegweisender Anschlussseite ein elektrisches Anschlusskabel abgeht, über das dem Ventilantrieb die zu seiner Betätigung erforderlichen elektrischen Signale zugeführt werden können.

Darüber hinaus sind in dem Produktkatalog "Der Pneumatic-Katalog 97/98", 33. Auflage, Festo AG & Co., Seite 5.8/21-3 als Steckdosen ausgebildete elektrische Anschlusseinheiten beschrieben, bei denen an einer der Steckseite abgewandten Anschlussseite ein fest angespritztes Kabel abgeht. Die Abgangsrichtung des Anschlusskabels verläuft hier schräg zur Außenfläche der Anschlussseite, während sie in dem oben genannten Fall rechtwinkelig zu der Außenfläche der Anschlussseite orientiert ist. In beiden Fällen liegt der Kabelabgangsbereich mittig in der Anschlussseite.

In beiden Fällen bereitet es Schwierigkeiten, das Anschlusskabel in einer von der vom Kabelabgangsbereich vorgegebenen Abgangsrichtung abweichenden Richtung von der Anschlusseinheit wegzuführen. Zwar kann das flexible Anschlusskabel entsprechend umgebogen werden. In beiden Fällen ist damit jedoch ein nicht unerheblicher Platzbedarf verbunden. Zwar wäre es bei einer Ausgestaltung als lösbar Anschlusseinheit wie im Falle der vorgenannten Steckdosen prinzipiell möglich, die Steckdose in unterschiedlichen Ausrichtungen anzustecken. Dies setzt jedoch eine gewisse Symmetrie der Steckkontakte voraus, die in der Regel nicht gegeben ist. Insofern lässt sich die Steckdose meist nur mit einer ganz bestimmten Orientierung an einem Ventil anstecken, wodurch auch die Abgangsrichtung des Anschlusskabels unveränderlich vorgegeben ist.

Aus der DE 32 15 054 A1 ist eine Ventilanordnung und elektrische Anschlusseinheit der eingangs genannten Art bekannt, wobei der Kabelabgangsbereich bezogen auf die Längsachse der einen länglichen Umriss aufweisenden Anschlussseite des Gehäuses zur Seite hin außermittig versetzt und folglich bezogen auf die Breite der Anschlussseite asymmetrisch platziert ist. Außerdem ist der Kabelabgangsbereich so ausgebildet, dass die Abgangsrichtung des Anschlusskabels zumindest im Wesentlichen parallel zu der Längsachse des Umrisses der Anschlussseite verläuft.

Es ist die Aufgabe der vorliegenden Erfindung, Maßnahmen vorzuschlagen, die bei einer elektrischen Anschlusseinheit und einer damit ausgestatteten Ventilanordnung eine flexible und dennoch platzsparende Kabelführung im unmittelbaren Anschluss an den Kabelabgangsbereich ermöglichen.

Zur Lösung dieser Aufgabe ist bei einer elektrische Anschlusseinheit der eingangs genannten Art vorgesehen, dass das Gehäuse an der Anschlussseite über Haltemittel verfügt, die eine lösbare Fixierung des Anschlusskabels in wenigstens einer bezüglich der Kabelabgangsrichtung in einer zu der Kabelabgangsrichtung und zur Querachse der Anschlussseite parallelen Biegeebene umgebogenen Kabelposition ermöglichen.

Die Aufgabe wird ferner gelöst durch eine Ventilanordnung, die mindestens eine einen elektrisch betätigbaren Ventilantrieb aufweisende Ventileinheit enthält und die über mindestens eine an der Ventileinheit montierbare oder montierte elektrische Anschlusseinheit mit den vorgenannten Merkmalen aufweist.

Auf diese Weise ergibt sich eine sehr hohe Variabilität in der durch ein Umbiegen des Anschlusskabels erzielbaren Kabelführung, verbunden mit einem nur geringen Platzbedarf für das abgebogene Anschlusskabel. So kann das Anschlusskabel in einer Biegeebene seitwärts umgebogen werden, die sowohl zu der Kabelabgangsrichtung als auch zu der zur Längsachse des Umrisses rechtwinkeligen Querrichtung der Anschlussseite parallel verläuft. Durch Umbiegen um etwa 90° kann hier erreicht werden, dass das Anschlusskabel quer von der Anschlusseinheit wegführt, wobei der umgebogene Bereich innerhalb des Umrisses der Anschlussseite liegt. Darüber hinaus besteht die vorteilhafte Möglichkeit eines Umbiegens um 180°, so dass das Kabel an der entgegengesetzt zur Kabelabgangsrichtung orientierten Schmalseite der Anschlussseite abgeht, wobei sich das Anschlusskabel über denjenigen Bereich der Anschlussseite hinweg erstreckt, der bezogen auf die Längsachse der Anschlussseite jenseits desjenigen Bereiches liegt, in dem sich der Kabelabgangsbereich befindet. In all diesen Fällen ergeben sich rechtwinkelig zu der Biegeebene keine Abmessungen, die nennenswert größer sind als der Kabeldurchmesser selbst. Das Anschlusskabel kann problemlos derart umgebogen werden, dass der aus dem Biegevorgang resultierende Kabelbogen innerhalb des Umrisses der Anschlussseite liegt und nicht störend seitlich hinausragt. Von Vorteil ist es, dass das Gehäuse an der Anschlussseite über Haltemittel verfügt, die eine lösbare Fixierung des Anschlusskabels in wenigstens einer durch ein solches Abbiegen erzielten, umgebogenen Kabelposition ermöglichen. Die Haltemittel können je nach Ausgestaltung und Anordnung ein Fixieren in nur einer oder auch in mehreren umgebogenen Kabelpositionen ermöglichen. Mindestens eine Komponente der Haltemittel kann beispielsweise zur Fixierung in mehreren Kabelpositionen beitragen.

Sollte es gewünscht sein, das Anschlusskabel rechtwinkelig zu der genannten Biegeebene von der Anschlusseinheit wegzuführen, bleibt gleichwohl die Option, das Anschlusskabel in einer zu der genannten Biegeebene rechtwinkeligen Ebene umzubiegen. Der sich hier einstellende Biegeradius ruft eine Verlängerung der Gesamtabmessungen lediglich in derjenigen Richtung hervor, in der auch das Anschlusskabel abgeht, so dass die Verlängerung der Abmessungen nicht stört.

Vorteilhafte Weiterbildungen der Erfindung gehen aus den Unteransprüchen hervor.

Es ist prinzipiell eine Anordnung möglich, bei der der Kabelabgangsbereich vollständig neben der Längsachse der Anschlussseite liegt, also vollständig innerhalb einer der beiden diesseits und jenseits der Längsachse liegenden Anschlussseitenhälften. Als zweckmäßiger wird allerdings eine Bauform angesehen, bei der der Kabelabgangsbereich die Längsachse der Anschlussseite noch ein Stück weit überlappt.

Die Unterbringung des aus einem Umbiegen resultierenden Kabelbogens innerhalb des Umrisses der Anschlussseite wird dadurch begünstigt, dass der Kabelabgangsbereich in der Achsrichtung der Längsachse der Anschlussseite mit Abstand versetzt zur längsmittig verlaufenden Querachse der Anschlussseite angeordnet ist. Die Kabelabgangsbereich weist hierbei zu dieser Querachse. Wird das Kabel im Anschluss an den Kabelabgangsbereich um 180° umgebogen, verläuft es in einer Ausrichtung vom Gehäuse der Anschlusseinheit weg, die derjenigen der im Kabelabgangsbereich vorhandenen Abgangsrichtung des Anschlusskabels entgegengesetzt ist.

Das Gehäuse der Anschlusseinheit verfügt an der Anschlussseite zweckmäßigerweise über eine zur Längsachse und zur Querachse der Anschlussseite im Wesentlichen parallele Außenfläche, wobei eine zumindest leicht Wölbung jedoch durchaus möglich ist. Jedenfalls ist es von Vorteil, wenn der Kabelabgangsbereich der Außenfläche vorgelagert ist, was insbesondere dadurch realisierbar ist, dass man den Kabelabgangsbereich an einer über die Außenfläche vorstehenden Kabelführungshutze ausbildet. Auf diese Weise kann die gewünschte Abgangsrichtung des Anschlusskabels ohne Knick im Kabel verwirklicht werden. Für die Kabelführungshutze empfiehlt sich ein abgewinkelter, abgebogener oder abgekröpfter Verlauf.

Vorzugsweise umfassen die Haltemittel mindestens einen an der Anschlussseite von einer Außenfläche des Gehäuses abstehenden Haltevorsprung, an dem sich das umgebogene Anschlusskabel entgegen seiner Biegerichtung abstützen kann. Mindestens ein Haltevorsprung kann hakenförmig ausgebildet sein, so dass er das sich an ihm anstützende Anschlusskabel in der Umfangsrichtung ein Stück weit übergreifen kann und sichergestellt ist, dass sich das Anschlusskabel auch bei Erschütterungen nicht versehentlich löst.

Die Anschlusseinheit kann durchaus ein fester Bestandteil einer Ventilanordnung sein, insbesondere fest mit einer einen Ventilantrieb enthaltenden Ventileinheit verbunden. Als besonders vorteilhaft wird jedoch eine vergleichbar einem Stecker lösbare Variante angesehen, bei der das Gehäuse der Anschlusseinheit an einer von der Anschlussseite abweichenden Befestigungsseite eine mechanische Schnittstelle aufweist, über die eine lösbare Befestigung an einer Komponente der Ventilanordnung möglich ist. An der Befestigungsseite befinden sich außerdem mit den Adern des Anschlusskabels verbundene elektrische Kontaktmittel, die sich selbstständig mit der Komponente der Ventilanordnung elektrisch kontaktieren, wenn das Gehäuse mit seiner mechanischen Schnittstelle daran angesetzt wird. Die elektrischen Kontaktmittel können Bestandteile der mechanischen Schnittstelle sein oder diese bilden. Zweckmäßigerweise befindet sich die Befestigungsseite an einer der Anschlussseite entgegengesetzten Seite des Gehäuses der Anschlusseinheit.

Die mit der Anschlusseinheit ausgestattete oder bestückbare Ventileinheit kann ausgebildet sein, um eine direkte fluidische Ansteuerung eines Verbrauchers zu übernehmen. Daneben sieht eine vorteilhafte Ausgestaltung eine Realisierung der Ventileinheit als Vorsteuerstufe eines fluidisch betätigbaren Hauptventils vor, wobei das Hauptventil die unmittelbare Ansteuerung eines Verbrauchers übernimmt und die Vorsteuerstufe den Betätigungszustand des Hauptventils vorgibt.

Nachfolgend wird die Erfindung anhand der beiliegenden Zeichnung näher erläutert. In dieser zeigen:
- Figur 1: eine bevorzugte Bauform der erfindungsgemäßen Ven- tilanordnung in einer perspektivischen Darstellung und in einer vorgesteuerten Bauart,
- Figur 2: die in der Ventilanordnung aus Figur 1 enthaltene Baugruppe bestehend aus einer als Vorsteuerstufe fungierenden Ventileinheit und einer daran lösbar montierten Anschlusseinheit, wobei das Anschlusska- bel der Anschlusseinheit in einer anderen Kabelpo- sition als in Figur 1 gezeigt ist,
- Figur 3: die Baugruppe aus Figur 2 im getrennten Zustand von Ventileinheit und Anschlusseinheit,
- Figur 4: die Baugruppe aus Figuren 2 und 3 im getrennten Zu- stand von Ventileinheit und Anschlusseinheit bei einer mit Figur 1 übereinstimmenden Kabelposition des Anschlusskabels, und
- Figur 5: eine Draufsicht auf die den Kabelabgangsbereich enthaltende Anschlussseite der Anschlusseinheit mit Blickrichtung gemäß Pfeil V aus Figur 4.

Die insgesamt mit Bezugsziffer 1 bezeichnete Ventilanordnung umfasst beim Ausführungsbeispiel eine sich aus mehreren Komponenten zusammensetzende blockartige Ventilbaugruppe 10 in Gestalt eines vorgesteuerten Mehrwegeventils und eine an diese Ventilbaugruppe 10 in bevorzugt lösbarer Weise angesetzte elektrische Anschlusseinheit 15, über die die Ventilbaugruppe 10 mit peripheren Komponenten elektrisch verbindbar ist.

Die Ventilanordnung 1 hat eine längliche Gestalt mit einer Längsachse 2. Die Ventilbaugruppe 10 setzt sich aus einem fluidisch betätigbaren Hauptventil 3 und einer stirnseitig daran angebauten Vorsteuerstufe 4 zusammen. Die Vorsteuerstufe 4 wird mittels elektrischer Betätigungssignale betätigt und generiert in Abhängigkeit von diesen elektrischen Signalen fluidische Ausgangssignale, mit denen das Hauptventil 3 angetrieben wird. Die elektrischen Betätigungssignale stammen von einer nur schematisch angedeuteten externen elektronischen Steuereinrichtung 9 und werden an die Vorsteuerstufe 4 mittels eines elektrischen Anschlusskabels 5 übermittelt, das ein fester Bestandteil der elektrischen Anschlusseinheit 15 ist.

Das Hauptventil 3 enthält ein längliches, insbesondere mehrteiliges Hauptventilgehäuse 8, in dem mindestens ein nur strichpunktiert angedeutetes Hauptventilglied 12 bewegbar angeordnet ist, dessen Stellung durch die von der Vorsteuerstufe 4 generierten fluidischen Ausgangssignale vorgegeben werden kann. An dem Hauptventilgehäuse 8 befinden sich zwei Verbraucherauslässe 13, an denen zu einem zu betätigenden Verbraucher, beispielsweise ein fluidbetätigter Antrieb, führende Fluidleitungen anschließbar sind. Nicht sichtbar sind in der Zeichnung unten am Hauptventilgehäuse 8 angeordnete Gehäuseöffnungen, über die ein dem angeschlossenen Verbraucher zuzuführendes und von dem Verbraucher wieder zurückströmendes Arbeitsfluid eingespeist und abgeführt werden kann. Auf diese Weise erhält auch die Vorsteuerstufe 4 ihr fluidisches Eingangssignal, das sie bei entsprechendem Betriebszustand als fluidisches Ausgangssignal dem Hauptventilglied 12 auferlegen kann. In der Regel sitzt die Ventilanordnung 1 mit ihrem Hauptventil 3, meist zusammen mit weiteren Ventilanordnungen, auf einer nicht weiter abgebildeten Anschlussplatte, über die eine gemeinsame Fluidspeisung und Fluidentsorgung sämtlicher Hauptventile 3 stattfinden kann.

Exemplarisch ist die Ventilanordnung 1 mit nur einer Vorsteuerstufe 4 ausgestattet, die an nur einer Stirnseite des Hauptventils 3 angeordnet ist. Hiervon abweichend kann die Ventilanordnung 1 aber auch zwei Vorsteuerstufen enthalten, die dann entweder beide nebeneinander an ein und derselben Stirnseite des Hauptventils 3 angeordnet sind oder an einander entgegengesetzten Stirnseiten des Hauptventils 3.

Die Vorsteuerstufe 4 ist von einer Ventileinheit 14 gebildet, die mit ihrer Rückseite 16 voraus in axialer Verlängerung an das Hauptventil 3 angebaut ist. An die entgegengesetzt orientierte, ebenfalls in Achsrichtung der Längsachse 2 orientierte Vorderseite 17 der Ventileinheit 14 ist die Anschlusseinheit 15 lösbar angesetzt.

Die Ventileinheit 14 ist eine Baugruppe bestehend aus zwei durch geeignete Befestigungsmittel 18 zusammengehaltenen Komponenten in Gestalt eines elektrisch betätigbaren Ventilantriebes 22 und eines über interne Ventilkanäle 24 verfügenden Grundkörpers 23. Die nur grob angedeuteten Ventilkanäle 24 münden zu der Rückseite 16 aus und stehen mit im Hauptventil 3 verlaufenden Kanälen in Verbindung, über die das fluidische Eingangssignal zugeführt wird und über die das fluidische Ausgangssignal zu dem Hauptventilglied 12 geleitet wird.

Der Ventilantrieb 22 und der Grundkörper 23 sind in Achsrichtung einer zu der Längsachse 2 rechtwinkeligen Hochachse 25 der Ventilanordnung 1 aneinander angesetzt. Bezogen auf eine übliche Orientierung der installierten Ventilanordnung 1 liegt der Ventilantrieb 22 unten und der Grundkörper 23 sitzt oben.

Die Vorderseite 17 der Ventileinheit 14 definiert eine erste mechanische Schnittstelle 35, an der die Anschlusseinheit 15 mittels einer dazu passenden zweiten mechanischen Schnittstelle 36 lösbar mechanisch fixierbar ist. Außerdem verfügt die Ventileinheit 14 im Bereich der ersten mechanischen Schnittstelle 35 über erste elektrische Kontaktmittel 26, die insbesondere direkt an dem Ventilantrieb 22 angeordnet sind und über die der Ventilantrieb 22 seine elektrischen Betätigungssignale erhält. Sie sind insbesondere in Gestalt zweier nach vorne wegragender Kontaktfahnen oder Kontaktstifte ausgebildet.

Beim Ausführungsbeispiel ist der Ventilantrieb 22 ein Elektromagnet, dessen beweglicher Anker mit einem Ventilglied 28 antriebsmäßig verbunden ist oder dieses unmittelbar bildet. Das Ventilglied 28 kooperiert mit einem insbesondere an oder in dem Grundkörper 23 ausgebildeten Ventilsitz 32, um je nach Stellung ein fluidisches Ausgangssignal zu dem Hauptventil 3 durchzuleiten oder von diesem abzusperren.

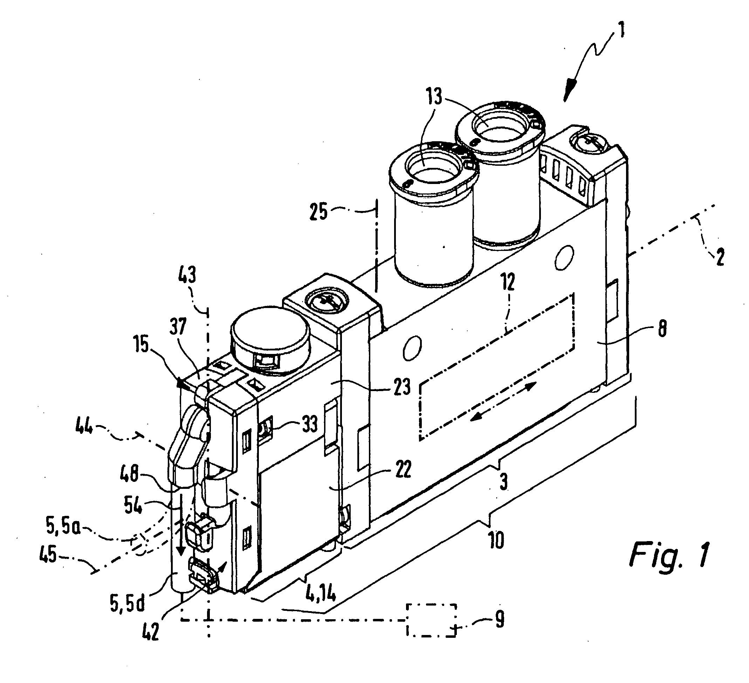

Die Ventileinheit 14 ist unabhängig von der elektrischen Anschlusseinheit 15 an dem Hauptventilgehäuse 8 befestigt. Dies geschieht beispielsweise mittels einer oder mehreren, nur aus Figur 1 ersichtlichen Befestigungsschrauben 33, die die Ventileinheit 14 von deren Vorderseite 17 her durchsetzen und die mit dem Hauptventil 3 verschraubt sind.

Handelt es sich bei der Ventilanordnung 1 um eine nicht vorgesteuerte Bauart, bei der die Ventileinheit 14 unmittelbar die Fluidströmung zu und von einem Verbraucher steuert, tritt an die Stelle des Hauptventilgehäuses 8 eine andere, insbesondere auch mit Fluidkanälen ausgestattete Komponente.

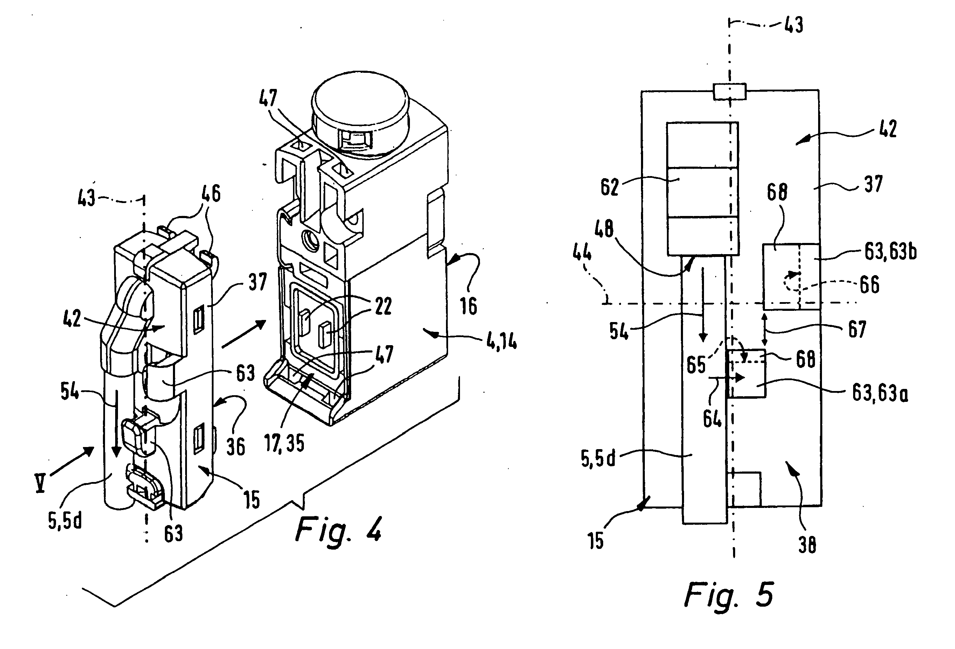

Die elektrische Anschlusseinheit 15 verfügt über ein Gehäuse 37 mit einer der Ventileinheit 14 zugewandten, die zweite mechanische Schnittstelle 36 definierenden Befestigungsseite 38 und einer hierzu entgegengesetzten, in Achsrichtung der Längsachse 2 von der Ventileinheit 14 wegweisenden Anschlussseite 42. Die Figur 5 ist ein Blick auf die Anschlussseite 42, wobei die Blickrichtung mit der Achsrichtung der Längsachse 2 der Ventilanordnung 1 zusammenfällt.

Insbesondere aus Figur 5 ist gut ersichtlich, dass das Gehäuse 37 der Anschlusseinheit 15 an der Anschlussseite 42 einen länglichen Umriss aufweist, wobei die Längsachse dieses Umrisses bzw. der Anschlussseite 42 strichpunktiert bei 43 angedeutet ist. Diese Längsachse 43 verläuft zweckmäßigerweise parallel zu der Hochachse 25 der Ventilanordnung 1.

An der Befestigungsseite 38 ist das Gehäuse 37 entsprechend gestaltet, sodass es im an der Ventileinheit 14 montierten Zustand deren Vorderseite 17 vollständig überdeckt.

Zweckmäßigerweise hat das Gehäuse 37 insgesamt einen im Wesentlichen rechteckigen Umriss, bei Betrachtung in Achsrichtung der Längsachse 2. Das Gehäuse 37 und mithin die Anschlussseite 42 verfügt über eine in der Querrichtung des Umrisses verlaufende Querachse 44, die rechtwinkelig zu der Längsachse 43 verläuft. Rechtwinkelig zu sowohl der Längsachse 43 als auch der Querachse 44 erstreckt sich eine im an der Ventilbaugruppe 10 montierten Zustand mit der Längsachse 2 zusammenfallende Hauptachse 45.

Die Längsachse 43 erstreckt sich breitmittig in der Anschlussseite 42, während die Querachse 44 längsmittig platziert ist.

Das Gehäuse 37 verfügt im Bereich der zweiten mechanischen Schnittstelle 36 über zweite elektrische Kontaktmittel 27, die selbsttätig in und außer Eingriff bezüglich den ersten Kontaktmitteln 26 gelangen, wenn die Anschlusseinheit 15 an die Ventileinheit 14 angesetzt oder von dieser abgenommen wird. Der Ausdruck "Eingriff" ist hier weit auszulegen und umfasst insbesondere auch Bauformen, bei der die beiden Kontaktmittel 26, 27 nicht ineinander eintauchen, sondern lediglich stirnseitig aneinander angedrückt werden.

Zur Befestigung an der Ventileinheit 14 wird das Gehäuse 37 ähnlich einem Stecker lösbar an die Ventileinheit 14 angesetzt. Die beiderseitigen mechanischen Schnittstellen 35, 36 können über Hakenmittel 46 und dazu komplementäre Ausnehmungsmittel 47 verfügen, die unter gegenseitiger lösbarer Verriegelung, insbesondere verrastend, ineinander eingreifen können, um das Gehäuse 37 an der Ventileinheit 14 zu fixieren.

Das Gehäuse 37 verfügt an der Anschlussseite 42 über einen Kabelabgangsbereich 48, an dem das Anschlusskabel 5 vom Gehäuse 37 abgeht. Das Anschlusskabel 5 tritt an dem Kabelabgangsbereich 48 aus dem Gehäuse 37 aus, in dessen Innerem die Adern 52 des Anschlusskabels 5 über strichpunktiert angedeutete elektrische Leiter 53 mit den zweiten elektrischen Kontaktmitteln 27 in fester Verbindung stehen. Die Adern 52 können mit den elektrischen Leitern 53 insbesondere fest verlötet sein. Die elektrischen Leiter 53 befinden sich vorzugsweise an mindestens einer im Gehäuse 37 untergebrachten Leiterplatte, die auch die zweiten elektrischen Kontaktmittel 27 tragen kann.

Wie man insbesondere den Figuren 1 und 5 gut entnehmen kann, ist der Kabelabgangsbereich 48 seitwärts, also in Achsrichtung der Querachse 44, außermittig versetzt zu der Längsachse 43 an der Anschlussseite 42 platziert. Dabei liegt er innerhalb des Umrisses des Gehäuses 23. Vorzugsweise ist der Kabelabgangsbereich 48 so platziert, dass er nicht komplett neben der Längsachse 43 liegt, sondern letztere noch ein Stück weit überlappt. Der Grad der Überlappung wird in der Regel um so größer sein, je schmäler die Anschlussseite 42 ist.

Es ist ferner von Vorteil, wenn der Kabelabgangsbereich 48 in Achsrichtung der Längsachse 43 mit Abstand versetzt zu der Querachse 44 angeordnet ist, hierbei aber dieser Querachse 44 zugewandt ist. Gemäß Figur 1 befindet sich der Kabelabgangsbereich 48 vorzugsweise oberhalb der Querachse 44 und weist nach unten, so dass auch die durch einen Pfeil markierte Kabelabgangsrichtung 54 - also die Richtung, mit der das Anschlusskabel 5 an dem Kabelabgangsbereich 48 austritt - nach unten orientiert ist.

Letzteres steht im Einklang mit der grundsätzlichen Erwägung, den Kabelabgangsbereich 48 unabhängig von seiner Platzierung so zu orientieren, dass die Abgangsrichtung 54 des Anschlusskabels 5 zumindest im Wesentlichen und vorzugsweise genau parallel zu der Längsachse 43 der Anschlussseite 42 verläuft.

Wenn es gewünscht ist, dass das Anschlusskabel 5 in axialer Verlängerung der Ventilanordnung 1 von letzterer wegführt, kann es auf Grund seiner Flexibilität unmittelbar im Anschluss an den Kabelabgangsbereich 48 in einer Ebene nach vorne umgebogen werden, die parallel zu einer von der Hauptachse 45 und von der Längsachse 43 aufgespannten Ebene verläuft. Das wegführende Kabel kann hier insbesondere in Achsrichtung der Längsachse 2 wegführen, wie dies in Figur 1 strichpunktiert anhand einer möglichen ersten Kabelposition 5a verdeutlicht ist.

Der besondere Vorteil des geschilderten Aufbaus äußert sich jedoch darin, dass sich das Anschlusskabel 5 im Anschluss an den Kabelabgangsbereich 48 aufgrund seiner Flexibilität derart seitwärts gerichtet mehr oder weniger stark umbiegen lässt, dass die sich ergebende Biegeebene 55 - also diejenige Ebene, innerhalb der sich der gebogene Längenabschnitt des Anschlusskabels 5 erstreckt - sowohl zu der Kabelabgangsrichtung 54 als auch zu der Querachse 44 parallel verläuft. Mit anderen Worten erstreckt sich die Biegeebene 55 beim Ausführungsbeispiel rechtwinkelig zu der Hauptachse 45.

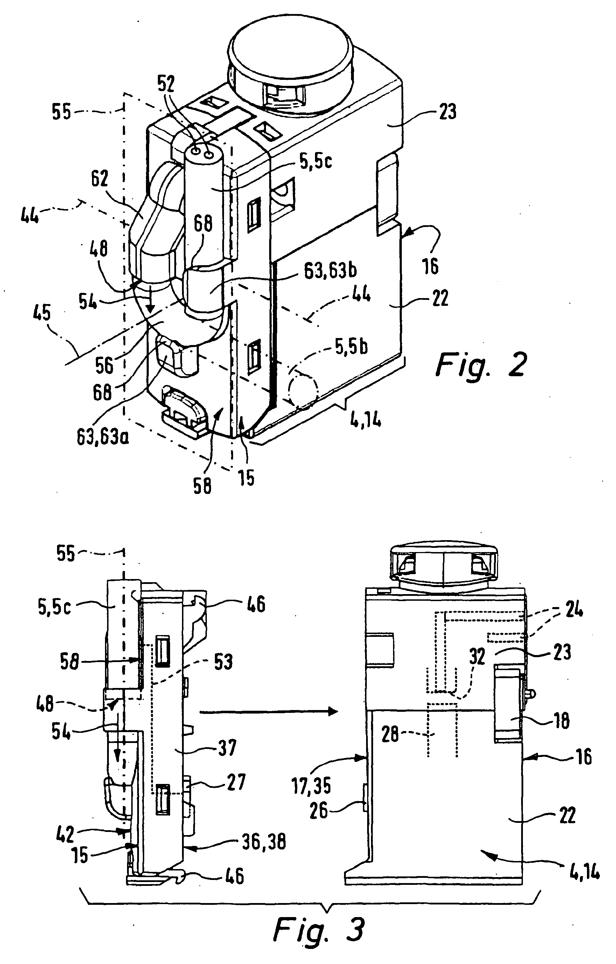

Eine auf diese Weise erhältliche, um 90° abgebogene zweite Kabelposition des Anschlusskabels 5 ist in Figur 2 strichpunktiert bei 5b angedeutet. Eine dritte Kabelposition mit um 180° umgebogenem Anschlusskabel 5 zeigt die Figur 2 in durchgezogenen Linien bei 5c.

Es versteht sich, dass der aus dem Umbiegen resultierende Biegebogen 56 des Anschlusskabels 5 bei sowohl der zweiten als auch der dritten Kabelposition 5b, 5c seitwärts zu der Längsachse 42 hin gerichtet ist, derart, dass das Anschlusskabel 55 diese Längsachse 43 überschreitet, wobei es bei der zweiten Kabelposition 5b etwa rechtwinkelig zu der Längsachse 43 seitwärts aus dem Umriss der Anschlussseite 42 heraustritt. In der dritten Kabelposition 5c tritt das Anschlusskabel 5 mit zu der Kabelabgangsrichtung 54 exakt entgegengesetzter Austrittsrichtung an einer Schmalseite des Umrisses über die Anschlussseite 42 hinaus.

Die illustrierten drei Kabelpositionen ermöglichen somit ein Wegführen des Anschlusskabels 5 von der Ventilanordnung 1 entweder in axialer Richtung nach vorne oder seitwärts gerichtet oder nach oben hin.

Wenn es die Einbaulage der Ventilanordnung 1 zulässt, kann das Anschlusskabel 5 auch ungebogen und unmittelbar in der Kabelabgangsrichtung 54 - vorliegend nach unten hin - aus dem Umriss der Anschlussseite 42 herausgeführt werden, wie dies in Figuren 1, 4 und 5 die dort gezeigte optionale vierte Kabelposition 5d verdeutlicht.

Von Vorteil ist es, wenn das Gehäuse 37 an seiner Anschlussseite 42 eine zu der Längsachse 43 und der Querachse 44 des Gehäuseumrisses im Wesentlichen parallele vordere Außenfläche 58 aufweist, die beim Ausführungsbeispiel rechtwinkelig zu der Hauptachse 45 verläuft. In diesem Fall ist der Kabelabgangsbereich 48, wie man dies insbesondere in Figuren 2 und 3 entnehmen kann, der vorderen Außenfläche 58 zweckmäßigerweise vorgelagert, so dass das Anschlusskabel 5 ohne Abknicken geradlinig austreten kann.

Verwirklichen lässt sich diese Anordnung besonders einfach durch eine an die vordere Außenfläche 58 des Gehäuses 37 angeformte, über die Außenfläche 58 vorstehende Kabelführungshutze 62, die abgewinkelt, abgebogen oder abgekröpft ist und deren Endbereich den Kabelabgangsbereich 48 definiert. Die Kabelführungshutze 62 definiert einen nicht weiter abgebildeten Kabeldurchtrittskanal, durch den hindurch das Anschlusskabel 5 in das Gehäuse 37 eintritt. Zumindest partiell kann die Kabelführungshutze 62 nach Art eines Rohrstutzens ausgeführt sein.

Es ist von Vorteil, wenn das Gehäuse 37 an der Anschlussseite 42 über Haltemittel 63 verfügt, die dazu dienen, das Anschlusskabel 5 in einer oder mehreren umgebogenen Kabelpositionen zu fixieren. Die Anschlusseinheit 15 des Ausführungsbeispiels verfügt über Haltemittel 63 zur wahlweisen Fixierung des Anschlusskabels 5 in der um 90° abgebogenen zweiten Kabelposition 5b oder der um 180° umgebogenen dritten Kabelposition 5c.

Die Haltemittel 63 umfassen beim Ausführungsbeispiel zwei Haltevorsprünge 63a, 63b. Davon ist ein erster Haltevorsprung 63a an einer Stelle angeordnet, die zu dem Kabelabgangsbereich 48 in der Kabelabgangsrichtung 54 beabstandet ist und die gleichzeitig in einer hierzu rechtwinkeligen Versatzrichtung 64 versetzt zu dem Kabelabgangsbereich 48 platziert ist, wobei die Versatzrichtung 64 in die entgegengesetzte Richtung weist wie die Versatzrichtung, in der der Kabelabgangsbereich 48 bezüglich der Längsachse 43 versetzt ist.

Der erste Haltevorsprung 63a ist insbesondere derart quer versetzt, dass das Anschlusskabel 5 bei Einnahme der vierten Kabelposition 5d ungehindert geradlinig daran vorbeilaufen kann.

Sowohl in der zweiten als auch in der dritten Kabelposition 5b, 5c stützt sich das Anschlusskabel 5 mit seiner vom Krümmungszentrum wegweisenden Außenfläche des Biegebogens 56 an einer entgegengesetzt zu der Kabelabgangsrichtung 54 orientierten ersten Abstützfläche 65 des ersten Haltevorsprunges 63 ab.

Ein zweiter Haltevorsprung 63b sitzt an einer Stelle, die zu dem ersten Haltevorsprung 63a entgegen der Kabelabgangsrichtung 54 beabstandet ist und die gleichzeitig von dem Kabelabgangsbereich 48 in der Versatzrichtung 64 weiter entfernt ist als der erste Haltevorsprung 63a.

Aufgrund des hieraus resultierenden Versatzes 67 in Achsrichtung der Längsachse 43 kann das um nur 90° umgebogene Anschlusskabel 5 zwischen den beiden Haltevorsprüngen 63a, 63b hindurchgeführt werden, wie dies in Figur 2 anhand der zweiten Kabelposition 5b illustriert ist.

In der dritten Kabelposition 5c kann sich das Anschlusskabel 5 wie in der zweiten Kabelposition 5b mit ihrem Biegebogen 56 an der ersten Abstützfläche 65 abstützen und zusätzlich an einer seitlich am zweiten Haltevorsprung 63b orientierten zweiten Abstützfläche 66, die der Längsachse 43 zugewandt ist, zu dieser jedoch einen Abstand aufweist. An der zweiten Abstützfläche 66 stützt sich das Anschlusskabel 5 seitlich mit einem sich an den ersten Biegebogen 56 anschließenden geradlinigen Längenabschnitt ab.

Aufgrund seiner Elastizität tendiert das Anschlusskabel 5 dazu, eine mechanisch vorspannungslose oder zumindest vorspannungsarme geradlinige oder weniger stark gebogene Konfiguration einzunehmen. Dies führt dazu, dass sich das Anschlusskabel 5, das ja auch an dem Kabelabgangsbereich 48 gehäusefest fixiert ist, sich selbsttätig gegen die Abstützflächen 65, 66 drückt und dadurch eine stabile Kabelposition einnimmt. Gleichwohl ist es von Vorteil, wenn mindestens ein und zweckmäßigerweise sämtliche Haltevorsprünge 63a, 63b hakenförmig ausgebildet sind und einen die zugeordnete Abstützfläche 65, 66 in einem der vorderen Außenfläche 57 vorgelagerten Bereich überragenden Hakenvorsprung 68 aufweisen, der das Anschlusskabel 5 an dem der vorderen Außenfläche 57 abgewandten Umfangsbereich ein Stück weit übergreifen kann. Dadurch wird das Anschlusskabel 5 in den umgebogenen Kabelpositionen auch formschlüssig am Gehäuse 37 gehalten und behält seine Lage selbst bei extremen Erschütterungen der Ventilanordnung 1 bei.

Die Anzahl der Haltevorsprünge 63a, 63b kann im Vergleich zum Ausführungsbeispiel auch kleiner oder größer sein. Man kann die Haltemittel 63 so ausbilden, dass mit ihrer Hilfe mehr als nur zwei umgebogene Kabelpositionen fixierbar sind. Durch die Haltemittel 63 lässt sich eine stabile Position des Anschlusskabels 5 derart erzielen, dass sein erster Kabelbogen 56 vollständig innerhalb des Umrisses der Anschlussseite 42 liegt, bei einer Betrachtung in Achsrichtung der Hauptachse 45. Dadurch können gegenseitige Beeinträchtigungen vermieden werden, wenn mehrere ventilanordnungen 1 Seite an Seite nebeneinander angeordnet werden.

## Patentansprüche

1. Elektrische Anschlusseinheit zum elektrischen Anschließen einer Ventilanordnung (1) mittels eines elektrischen Anschlusskabels (5), mit einem Gehäuse (37), das eine Anschlussseite (42) mit länglichem Umriss aufweist, von der an einem Kabelabgangsbereich (4) das Anschlusskabel (5) abgeht, wobei der Kabelabgangsbereich (48) seitwärts außermittig versetzt zur breitenmittig verlaufenden Längsachse (43) der Anschlussseite (42) des Gehäuses innerhalb des Umrisses der Anschlussseite (42) angeordnet ist und die Abgangsrichtung (54) des Anschlusskabels (5) an dem Kabelabgangsbereich (48) zumindest im Wesentlichen parallel zu der Längsachse (43) der Anschlussseite (42) des Gehäuses (37) verläuft, **dadurch gekennzeichnet, dass** das Gehäuse (37) an der Anschlussseite (42) über Haltemittel (63) verfügt, die eine lösbare Fixierung des Anschlusskabels (5) in wenigstens einer bezüglich der Kabelabgangsrichtung (54) in einer zu der Kabelabgangsrichtung (54) und zur Querachse (44) der Anschlussseite (42) parallelen Biegeebene (55) umgebogenen Kabelposition (5b, 5c) ermöglichen.

2. Anschlusseinheit nach Anspruch 1, **dadurch gekennzeichnet, dass** der Kabelabgangsbereich (48) die Längsachse (43) der Anschlussseite (42) überlappt.

3. Anschlusseinheit nach Anspruch 1 oder 2, **dadurch gekennzeichnet, dass** der Kabelabgangsbereich (48) in Achsrichtung der Längsachse (43) der Anschlussseite (42) mit Abstand versetzt zur längsmittig verlaufenden Querachse (44) der Anschlussseite (42) angeordnet ist, wobei die Kabelabgangsrichtung (54) zu dieser Querachse (44) weist.

4. Anschlusseinheit nach einem der Ansprüche 1 bis 3, **dadurch gekennzeichnet, dass** das Gehäuse (37) an der Anschlussseite (42) eine zur Längsachse (43) und zur Querachse (44) der Anschlussseite (42) im Wesentlichen parallele Außenfläche (58) aufweist, bezüglich der der Kabelabgangsbereich (48) vorgelagert ist.

5. Anschlusseinheit nach Anspruch 4, **dadurch gekennzeichnet, dass** der Kabelabgangsbereich (48) an einer über die Außenfläche (58) vorstehenden Kabelführungshutze (62) ausgebildet ist.

6. Anschlusseinheit nach Anspruch 5, **dadurch gekennzeichnet, dass** die Kabelführungshutze (62) abgewinkelt, abgebogen oder abgekröpft ist.

7. Anschlusseinheit nach einem der Ansprüche 1 bis 6, **dadurch gekennzeichnet, dass** die Haltemittel (63) zum Fixieren des Anschlusskabels (5) in einer um 90° umgebogenen Kabelposition (5b) ausgebildet sind.

8. Anschlusseinheit nach einem der Ansprüche 1 bis 7, **dadurch gekennzeichnet, dass** die Haltemittel (63) zum Fixieren des Anschlusskabels (5) in einer um 180° umgebogenen Kabelposition (5c) ausgebildet sind.

9. Anschlusseinheit nach einem der Ansprüche 1 bis 8, **dadurch gekennzeichnet, dass** das Gehäuse (37) an der Anschlussseite (42) eine zur Längsachse (42) und zur Querachse (44) der Anschlussseite (42) im Wesentlichen parallele Außenfläche (58) aufweist, von der mindestens ein als Haltemittel (63) fungierender Haltevorsprung (63a, 63b) absteht, an dem sich das umgebogene Anschlusskabel (5) seitlich abstützen kann.

10. Anschlusseinheit nach Anspruch 9, **dadurch gekennzeichnet, dass** der mindestens eine Haltevorsprung (63a, 63b) hakenförmig ausgebildet ist, so dass er das sich an ihm abstützende Anschlusskabel (5) auf der der Außenfläche (57) des Gehäuses (37) entgegengesetzten Seite zumindest ein Stück weit umgreift.

11. Anschlusseinheit nach Anspruch 9 oder 10, **dadurch gekennzeichnet, dass** ein erster Haltevorsprung (63a) mit in der Kabelabgangsrichtung (54) gemessenem Abstand zu dem Kabelabgangsbereich (48) angeordnet ist und ein zweiter Haltevorsprung (63b) sich an einer Stelle befindet, die zu dem Kabelabgangsbereich (48) in Achsrichtung der Querachse (44) versetzt ist und die zugleich entgegen der Kabelabgangsrichtung (54) bezüglich dem ersten Haltevorsprung (63a) versetzt ist.

12. Anschlusseinheit nach einem der Ansprüche 1 bis 11, **dadurch gekennzeichnet, dass** ihr Gehäuse (37) an einer nicht mit der Anschlussseite (42) identischen Befestigungsseite (38) eine mechanische Schnittstelle (35) sowie mit den Adern (52) des Anschlusskabels (5) verbundene elektrische Kontaktmittel (27) aufweist, wobei über die mechanische Schnittstelle (35) eine lösbare Befestigung an einer Komponente der Ventilanordnung (1) möglich ist, unter gleichzeitiger elektrischer Kontaktierung der elektrischen Kontaktmittel mit dieser Komponente der Ventilanordnung (1).

13. Anschlusseinheit nach Anspruch 12, **dadurch gekennzeichnet, dass** die Befestigungsseite (38) entgegengesetzt zu der Anschlussseite (42) angeordnet ist.

14. Ventilanordnung, mit mindestens einer einen elektrisch betätigbaren Ventilantrieb (22) aufweisenden Ventileinheit (14) und mit mindestens einer an der Ventileinheit (14) montierbaren oder montierten elektrischen Anschlusseinheit (15) nach einem der Ansprüche 1 bis 13.

## Claims

1. Electrical connection unit for the electrical connection of a valve assembly (1) by means of an electrical connection cable (5), with a casing (37) which has a connection side (42) with an oblong outline and from which the connection cable (5) issues from a cable outlet area (48), wherein the cable outlet area (48) is located within the outline of the connection side (42) off-centre to the side and offset to the longitudinal axis (43) of the connection side (42) of the casing, and the outgoing direction (54) of the connection cable (5) at the cable outlet area (48) runs substantially parallel to the longitudinal axis (43) of the connection side (42) of the casing (37), **characterised in that** the casing (37) has on the connection side (42) holding means (63) which allow releasable fixing of the connection cable (5) bent over in at least one cable position (5b, 5c), with reference to the cable outgoing direction (54), in a bending plane (55) parallel to the cable outgoing direction (54) and to the transverse axis (44) of the connection side (42).

2. Connection unit according to claim 1, **characterised in that** the cable outlet area (48) overlaps the longitudinal axis (43) of the connection side (42).

3. Connection unit according to claim 1 or 2, **characterised in that** the cable outlet area (48) is located in the axial direction of the longitudinal axis (43) of the connection side (42) offset and with clearance from the transverse axis (44) of the connection side (42) running in the longitudinal centre, wherein the cable outgoing direction (54) faces towards this transverse axis (44).

4. Connection unit according to any of claims 1 to 3, **characterised in that** the casing (37) has on the connection side (42) an outer surface (58), substantially parallel to the longitudinal axis (43) and to the transverse axis (44) of the connection side (42), and in front of which the cable outlet area (48) is located.

5. Connection unit according to claim 4, **characterised in that** the cable outlet area (48) is formed on a cable guidance hood (62) which extends beyond the outer surface (58).

6. Connection unit according to claim 5, **characterised in that** the cable guidance hood (62) is angled, bent or bent at right-angles.

7. Connection unit according to any of claims 1 to 6, **characterised in that** the holding means (63) for fixing the connection cable (5) are formed in a cable position (5b) bent through 90°.

8. Connection unit according to any of claims 1 to 7, **characterised in that** the holding means (63) for fixing the connection cable (5) are formed in a cable position (5c) bent through 180°.

9. Connection unit according to any of claims 1 to 8, **characterised in that** the casing (37) has on the connection side (42) an outer surface (58), substantially parallel to the longitudinal axis (43) and the transverse axis (44) of the connection side (42), from which there projects at least one holding projection (63a, 63b) acting as holding means (63), on which the bent-over connection cable (5) may rest at the side.

10. Connection unit according to claim 9, **characterised in that** the holding projection or projections (63a, 63b) is or are hook-shaped, so that it or they encompass the connection cable (5) resting on it or them for at least a short distance on the side opposite the outer surface (57) of the casing (37).

11. Connection unit according to claim 9 or 10, **characterised in that** a first holding projection (63a) is located with clearance from the cable outlet area (48) measured in the cable outgoing direction (54), and a second holding projection (63b) is located at a point which is offset relative to the cable outlet area (48) in the axial direction of the transverse axis (44) and at the same time is offset relative to the first holding projection (63a) towards the cable outgoing direction (54).

12. Connection unit according to any of claims 1 to 11, **characterised in that** its casing (37) has on a fastening side (38) not identical with the connection side (42) a mechanical interface (35) and electrical contact means (27) connected to wires (52) of the connection cable (5), wherein a releasable fastening to a component of the valve assembly (1) is possible via the mechanical interface (35), with simultaneous electrical contacting of the electrical contact means with this connected position of the valve assembly (1).

13. Connection unit according to claim 12, **characterised in that** the fastening side (38) is opposite to the connection side (42).

14. Valve assembly with at least one valve unit (14) with an electrically actuable valve drive (22) and with at least one electrical connection unit (15) according to any of claims 1 to 13, mountable or mounted on the valve unit (14).

## Revendications

1. Unité de connexion électrique pour le raccordement électrique d'un ensemble de soupapes (1) à l'aide d'un câble de connexion électrique (5), avec un boîtier (37), lequel présente un côté connexion (42) avec un contour oblong à partir duquel le câble de connexion (5) s'étend au niveau d'une région de départ de câble (4), la région de départ de câble (48) étant disposée sur le côté et excentrée par rapport à l'axe longitudinal s'étendant de manière centrée en largeur (43) du côté connexion (42) du boîtier à l'intérieur du contour du côté connexion (42) et la direction de départ (54) du câble de connexion (5) au niveau de la région de départ de câble (48) s'étendant au moins essentiellement parallèlement à l'axe longitudinal (43) du côté connexion (42) du boîtier (37), **caractérisée en ce que** le boîtier (37) dispose de moyens de fixation (63) sur le côté connexion (42), lesquels permettent une fixation détachable du câble de connexion (5) au moins dans une position de flexion du câble (5b, 5c) dans un plan de flexion (55) parallèle à la direction de départ de câble (54) et à l'axe transversal (44) du côté connexion (42).

2. Unité de connexion selon la revendication 1, **caractérisée en ce que** la région de départ de câble (48) se superpose à l'axe longitudinal (43) du côté connexion (42).

3. Unité de connexion selon la revendication 1 ou 2, **caractérisée en ce que** la région de départ de câble (48) est disposée dans le sens de l'axe de l'axe longitudinal (43) du côté connexion (42) de manière excentrée par rapport à l'axe transversal (44) s'étendant de manière centrée longitudinalement du côté connexion (42), moyennant quoi la direction de départ de câble (54) pointe vers cet axe transversal (44).

4. Unité de connexion selon l'une quelconque des revendications 1 à 3, **caractérisée en ce que** le boîtier (37) présente du côté connexion (42) une surface extérieure (58) essentiellement parallèle à l'axe longitudinal (43) et à l'axe transversal (44) du côté connexion (42), par rapport à laquelle la région de départ de câble (48) est disposée en amont.

5. Unité de connexion selon la revendication 4, **caractérisée en ce que** la région de départ de câble (48) est formée sur une capote de guidage de câble (62) dépassant de la surface extérieure (58).

6. Unité de connexion selon la revendication 5, **caractérisée en ce que** la capote de guidage de câble (62) est incurvée, recourbée ou coudée.

7. Unité de connexion selon l'une quelconque des revendications 1 à 6, **caractérisée en ce que** les moyens de fixation (63) pour la fixation du câble de connexion (5) sont réalisés dans une position de câble replié de 90° (5b).

8. Unité de connexion selon l'une quelconque des revendications 1 à 7, **caractérisée en ce que** les moyens de fixation (63) pour la fixation du câble de connexion (5) sont réalisés dans une position de câble replié de 180° (5c).

9. Unité de connexion selon l'une quelconque des revendications 1 à 8, **caractérisée en ce que** le boîtier (37) présente sur le côté connexion (42) une surface extérieure (58) essentiellement parallèle à l'axe longitudinal (42) et à l'axe transversal (44) du côté connexion (42), de laquelle dépasse au moins une saillie de fixation (63a, 63b) servant de moyen de fixation (63), sur laquelle le câble de connexion recourbé (5) peut être en appui latéral.

10. Unité de connexion selon la revendication 9, **caractérisée en ce que** ce ou ces saillies de fixation (63a, 63b) sont réalisées en forme de crochet, de manière à ce qu'elles entourent au moins sur une partie le câble de connexion (5) en appui sur celles-ci sur le côté opposé à la surface extérieure (57) du boîtier (37).

11. Unité de connexion selon la revendication 9 ou 10, **caractérisée en ce qu'**une première saillie de fixation (63a) est disposée à une distance mesurée en direction de départ du câble (54) par rapport à la région de départ de câble (48) et **en ce qu'**une deuxième saillie de fixation (63b) se trouve à un endroit qui est décalé en direction d'axe de l'axe transversal (44) par rapport à la région de départ de câble (48) et qui est en même temps décalé dans le sens contraire de la direction de départ de câble (54) par rapport à la première saillie de fixation (63a).

12. Unité de connexion selon l'une quelconque des revendications 1 à 11, **caractérisée en ce que** son boîtier (37) présente une interface mécanique (35) sur un côté de fixation (38) non identique au côté connexion (42) ainsi que des moyens de contact électrique (27) en liaison avec les conducteurs (52) du câble de connexion (5), moyennant quoi par l'intermédiaire de l'interface mécanique (35) une fixation détachable sur un composant de l'ensemble de soupapes (1) est possible, avec un établissement de contact électrique simultané entre les moyens de contact électrique et ce composant de l'ensemble de soupapes (1).

13. Unité de connexion selon la revendication 12, **caractérisée en ce que** le côté de fixation (38) est disposé de manière opposée au côté connexion (42).

14. Ensemble de soupapes, avec au moins une unité de soupape (14) présentant un entraînement de soupape (22) à commande électrique et avec au moins une unité de connexion électrique (15) selon l'une quelconque des revendications 1 à 13 montée, ou pouvant être montée sur l'unité de soupapes (14).
